# EUROPÄISCHE PATENTSCHRIFT

(11) **EP 4 001 180 B1**
(45) Veröffentlichungstag und Bekanntmachung des Hinweises auf die Patenterteilung: **21.08.2024**
(21) Anmeldenummer: 21207748.1
(22) Anmeldetag: 11.11.2021
(51) Int. Cl.: B65G 43/08, B65G 47/61, B65G 17/20

(54) **VORRICHTUNG UND VERFAHREN ZUM AUFGEBEN VON TRANSPORTTASCHEN IN EINE FÖRDERTECHNIK EINER HÄNGEFÖRDERANLAGE SOWIE DERARTIGE HÄNGEFÖRDERANLAGE**
DEVICE AND METHOD FOR FEEDING TRANSPORT BAGS INTO A CONVEYOR SYSTEM OF AN OVERHEAD CONVEYOR SYSTEM AND OVERHEAD CONVEYOR SYSTEM OF THIS TYPE
DISPOSITIF ET PROCÉDÉ DE DISTRIBUTION DE SACS DE TRANSPORT DANS UNE TECHNIQUE DE TRANSPORT D'UNE INSTALLATION DE TRANSPORT SUSPENDU, AINSI QU'UNE TELLE INSTALLATION DE TRANSPORT SUSPENDU

(30) Priorität: 19.11.2020 DE 102020214613
(43) Veröffentlichungstag der Anmeldung: 25.05.2022
(73) Patentinhaber: Dürkopp Fördertechnik GmbH, 33719 Bielefeld (DE)
(72) Erfinder: Merten, Markus, 33605 Bielefeld (DE)
(74) Vertreter: Rau, Schneck & Hübner Patentanwälte Rechtsanwälte PartGmbB

(56) Entgegenhaltungen:
- DE-A1- 102016 208 866
- DE-B3- 102019 215 304
- US-A1- 2013 264 171
- US-A1- 2015 210 482
- US-A1- 2015 274 425
- US-A1- 2018 118 471

## Beschreibung

Der Inhalt der deutschen Patentanmeldung DE 10 2020 214 613.6 wird durch Bezugnahme hierin aufgenommen.

Die Erfindung betrifft eine Vorrichtung und ein Verfahren zum Aufgeben von Transporttaschen in eine Fördertechnik einer Hängeförderanlage sowie eine derartige Hängeförderanlage.

US 2018/0118471 A1 offenbart eine Transportvorrichtung für Warenträger. Die US 2018/0118471 A1 offenbart auch eine Vorrichtung zum Aufgeben von Hängeadaptern in eine Fördertechnik einer Hängeförderanlage gemäß dem Oberbegriff des Anspruchs 1.

US 2015/0274425 A1 offenbart eine Vorrichtung zur platzsparenden Anordnung von Hängegütern. US 2015/0210482 A1 offenbart eine Fördervorrichtung für die automatisierte Förderung von Einzelwaren.

DE 10 2019 215 304 B3 offenbart eine Hängeförderanlage mit einer Vorrichtung zum Aufgeben von Hängefördergut in die Hängeförderanlage. Mittels einer Erfassungseinheit wird die jeweilige Dicke einzelner Hängefördergüter ermittelt. Die Hängefördergüter werden von einer Aufgabeeinheit vereinzelt und in Abhängigkeit der erfassten Dicke mit einem veränderlich festlegbaren Transportabstand in eine Fördertechnik der Hängeförderanlage aufgegeben. Die Erfassung der Dicke der einzelnen Hängefördergüter ist aufwändig und komplex.

Es ist die Aufgabe der vorliegenden Erfindung, eine störungsfreie Förderung von Transporttaschen in einer Hängeförderanlage mit größtmöglicher Leistungseffizienz unaufwändig und unkompliziert zu ermöglichen.

Diese Aufgabe ist erfindungsgemäß gelöst durch eine Vorrichtung mit den im Anspruch 1 angegebenen Merkmalen, durch eine Hängeförderanlage mit den im Anspruch 7 angegebenen Merkmalen sowie durch ein Verfahren mit den im Anspruch 11 angegebenen Merkmalen.

Erfindungsgemäß wurde erkannt, dass es nicht erforderlich ist, die Dicke von Transporttaschen zu ermitteln, um dennoch einen Transportabstand für eine Fördertechnik einer Hängeförderanlage veränderlich festzulegen. Es wurde stattdessen gefunden, dass es zur veränderlichen Festlegung des Transportabstands für das Fördern der Transporttaschen mittels der Fördertechnik ausreicht, die Anzahl von Hängeadaptern zu erfassen, die innerhalb eines Erfassungsbereichs an einer Förderschiene einer Vorrichtung zum Aufgeben der Transporttaschen in die Fördertechnik angeordnet sind. Die Hängeadapter dienen jeweils zum hängenden Fördern einer Transporttasche in der Vorrichtung und in der Fördertechnik der Hängeförderanlage. Die Transporttaschen sind von der Vorrichtung, insbesondere von der Förderschiene, unmittelbar in die Fördertechnik förderbar. Dazu ist die Förderschiene mit der Fördertechnik fördertechnisch koppelbar ausgeführt. Entlang der Förderschiene werden die Hängeadapter hängend gefördert. Dies kann beispielsweise schwerkraftbedingt dadurch erfolgen, dass die Förderschiene gegenüber der Horizontalen mit einem von Null verschiedenen Neigungswinkel geneigt angeordnet ist. Der Neigungswinkel beträgt insbesondere höchstens 25°, insbesondere höchstens 20°, insbesondere höchstens 15°, insbesondere zwischen 1° und 12° und insbesondere zwischen 1° und 10°.

Die Fördertechnik weist insbesondere eine feste Mitnahme für den Transport der Hängeadapter und damit der Transporttaschen auf.

Zum Erfassen der Anzahl der Hängeadapter im Erfassungsbereich dient eine Erfassungseinheit, die mit einer Steuerungseinheit in Signalverbindung steht. Die Signalverbindung kann kabelgebunden oder kabellos, insbesondere mittels Funktechnologie, erfolgen. Die Steuerungseinheit ist dazu eingerichtet, den Transportabstand für das Fördern der Transporttaschen mittels der Fördertechnik veränderlich festzulegen. Der Transportabstand ist insbesondere ein Mindest-Transportabstand. Der Transportabstand wird insbesondere in Abhängigkeit der Anzahl der Hängeadapter ermittelt. Insbesondere wird aus der Anzahl der Hängeadapter ein mittlerer Abstand benachbarter Hängeadapter berechnet.

Insbesondere wurde also gefunden, dass es für die veränderliche Festlegung des Transportabstands nicht erforderlich ist, jeden einzelnen Abstand benachbarter Hängeadapter separat zu bestimmen. Es ist insbesondere ausreichend, wenn die Gesamtanzahl der Hängeadapter in dem Erfassungsbereich bestimmt, insbesondere gezählt, wird und aus der Anzahl der Hängeadapter und einer Staulänge der Hängeadapter im Erfassungsbereich ein mittlerer Abstand für die in dem Erfassungsbereich angeordneten, aufgestauten Hängeadapter ermittelt wird.

Mit der Steuerungseinheit steht eine Vereinzelungseinheit in Signalverbindung, die zum vereinzelten Aufgeben der Hängeadapter in die Fördertechnik dient. Die Signalverbindung zwischen der Steuerungseinheit und der Vereinzelungseinheit kann kabelgebunden oder kabellos erfolgen.

Gemäß einem Aspekt der Erfindung kann die Förderschiene entlang der Förderrichtung einen stetig differenzierbaren Verlauf aufweisen. Insbesondere der Übergangsbereich zu dem Abschnitt der Förderschiene, welcher zum schwerkraftbedingten Fördern der Hängeadapter ausgebildet ist, insbesondere gegenüber der Horizontalen geneigt orientiert ist, kann einen stetig differenzierbaren Verlauf aufweisen, insbesondere knickfrei ausgebildet sein.

Die Förderschiene und/oder der mindestens eine Hängeadapter umfassen vorzugsweise ein Metall, insbesondere Aluminium und/oder Stahl, insbesondere bestehen sie daraus.

Ein Erfassungssensor gemäß Anspruch 2 ermöglicht eine vorteilhafte, insbesondere kontaktlose, Erfassung der Hängeadapter. Die kontaktlose Erfassung des Hängeadapters ermöglicht eine kollisionsfreie und schnelle Erfassung der Adapter. Eine Beeinträchtigung des Förderverfahrens ist dadurch vermieden. Die Erfassungssensoren und insbesondere die Erfassungseinheit erhöhen die Zuverlässigkeit und Effizienz der Hängeförderanlage. Ein Erfassungssensor ist insbesondere im Bereich der Förderschiene angeordnet, insbesondere an der Förderschiene befestigt. Insbesondere ist der Erfassungssensor in Längsrichtung der Förderschiene axial festgelegt. Es kann von Vorteil sein, den Erfassungssensor bezüglich der Förderschiene axial veränderlich festzulegen. Insbesondere definiert der Erfassungssensor den Erfassungsbereich an der Förderschiene. Insbesondere ist der Erfassungssensor relativ zu der Förderschiene derart angeordnet, dass der Erfassungssensor die entlang der Förderschiene geförderten Hängeadapter unmittelbar erfassen kann.

Generell kann der mindestens eine Erfassungssensor zum Erfassen mindestens eines Hängeadapters und/oder mindestens eines Transportmittels, insbesondere mindestens einer Transporttasche, ausgebildet sein. Der Hängeadapter ist vorzugsweise ein Rollenadapter. Das Erfassen des Hängeadapters kann, insbesondere aufgrund seiner bekannter Geometrie und/oder seiner definierten Lagerung an der Förderschiene, besonders robust und zuverlässig erfolgen.

Eine Ausführung eines Erfassungssensors gemäß Anspruch 3 hat sich als besonders vorteilhaft erwiesen. Ein optischer Sensor, insbesondere in Form einer Lichtschranke, ist unkompliziert ausgeführt. Da erkannt worden ist, dass es ausreicht, das Vorhandensein eines Hängeadapters zu ermitteln, ist die Ausführung des Erfassungssensors als optischer Sensor, insbesondere als Lichtschranke, ausreichend. Eine Lichtschranke umfasst insbesondere ein Sendeelement und ein Empfangselement. Das Sendeelement sendet ein optisches Signal aus, das von dem korrespondierenden Empfangselement empfangen wird. In diesem Fall befindet sich kein Hängeadapter zwischen dem Sendeelement und dem Empfangselement. Wird kein optisches Signal empfangen, bedeutet dies, dass zwischen dem Sendeelement und dem Empfangselement ein Gegenstand, also ein Hängeadapter, angeordnet ist. Das Sendeelement und das korrespondierende Empfangselement sind beidseitig unterhalb der Förderschiene angeordnet. Eine Lichtausbreitungsrichtung des optischen Signals des Sendeelements ist quer und insbesondere senkrecht zu der Förderrichtung der Hängeadapter orientiert. Hängeadapter, die entlang der Förderschiene gefördert werden, müssen das optische Signal der Lichtschranke passieren, also durchqueren. Dadurch ist zuverlässig gewährleistet, dass jeder Hängeadapter von einem Erfassungssensor erfasst wird.

Alternativ können die Lichtschranken auch als Reflexionslichtschranken ausgeführt sein. In diesem Fall weist jeder Erfassungssensor ein Sende-/Empfangselement und ein korrespondierendes Reflexionselement auf. Das Sende-/Empfangselement sendet ein optisches Signal an das Reflexionselement, das von diesem zurück an das Sende-/Empfangselement reflektiert wird. In diesem Fall befindet sich kein Gegenstand, also kein Hängeadapter, zwischen den Elementen der Reflexionslichtschranke. Wird kein zurückreflektiertes Signal an dem Sende-/Empfangselement erfasst, befindet sich ein Gegenstand, insbesondere also ein Hängeadapter, zwischen den Komponenten der Reflexionslichtschranke.

Grundsätzlich sind auch andere Sensoren, insbesondere optische Sensoren, möglich, die dazu geeignet sind, die Anzahl und insbesondere die Position der Hängeadapter in dem Erfassungsbereich zu ermitteln. Insbesondere kann der mindestens eine Erfassungssensor auch als Zeilenkamera mit einem CCD-, CMOS-, NMOS- oder InGaAs-Sensor ausgeführt sein. Insbesondere ist die Zeilenkamera derart ausgeführt, dass sie eine Breite aufweist, die der Breite des Erfassungsbereichs entspricht. Insbesondere kann es also ausreichend sein, nur einen einzigen Sensor zu verwenden. Anstelle der Zeilenkamera kann auch eine Flächenkamera verwendet werden.

Alternativ kann der Erfassungssensor als RFID-Sensor ausgeführt sein, der insbesondere mit dem Hängeadapter, insbesondere mit einem in und/oder an dem Hängeadapter angeordneten bzw. integrierten RFID-Chip kommunizieren kann. Bei einer derartigen Ausführung können neben der Adapteranzahl weitere Daten des Hängeadapters und insbesondere der an dem Hängeadapter hängend geförderten Transporttasche, erfasst werden. Insbesondere ist es denkbar, dass die in dem Hängeadapter gespeicherten Daten auch Daten zur Transporttasche, insbesondere zu dem in der Transporttasche geförderten Fördergut enthalten. Es ist insbesondere denkbar, dass aus den Daten des Förderguts auf eine Dicke der Transportasche Rückschlüsse gezogen werden können. Diese Daten können zur Verifizierung bei der Erfassung des Transportabstands dienen. Es ist alternativ möglich, den Transportabstand auf Basis der Daten des Förderguts in der Transporttasche, insbesondere einer maximal möglichen Dicke des Förderguts in der Transporttasche, festzulegen. Als maximal mögliche Dicke wird beispielsweise bei einem quaderförmigen Paket die größte Abmessung verstanden. Bei einem kugelförmigen Paket ist die maximale Abmessung der Durchmesser der Kugel.

Alternativ kann der Erfassungssensor auch als induktiver und/oder kapazitiver Näherungssensor ausgeführt sein.

Grundsätzlich kann der mindestens eine Erfassungssensor als kontaktierender Sensor ausgebildet sein. Der Erfassungssensor kann beispielsweise als Schalter, insbesondere als Taster, ausgebildet sein. Zum kontaktierenden Erfassen eines Hängeadapters kann der Erfassungssensor derart an der Förderschiene angeordnet sein, dass der jeweilige Hängeadapter, insbesondere einzeln, kontaktierend erfassbar ist. Vorzugsweise erfolgt das Schalten des mindestens einen Erfassungssensors durch einen Kontakt mit dem Hängeadapter, insbesondere aufgrund einer dadurch hergestellten elektrischen Verbindung und/oder aufgrund einer Relativbewegung zwischen dem Hängeadapter und dem Erfassungssensor.

Der mindestens eine Erfassungssensor kann auch als akustischer Sensor, insbesondere als Mikrofon, insbesondere zum Erfassen von Laufgeräuschen des Hängeadapters, ausgebildet sein.

Mehrere Erfassungssensoren gemäß Anspruch 4 ermöglichen eine unmittelbare Erfassung der Anzahl der Hängeadapter im Erfassungsbereich. Insbesondere sind mindestens zwei, insbesondere mindestens drei, insbesondere mindestens vier, insbesondere mindestens sechs, insbesondere mindestens acht, insbesondere mindestens zehn, insbesondere mindestens fünfzehn und insbesondere bis zu einhundert Erfassungssensoren vorgesehen. Die Erfassungssensoren sind entlang der Förderschiene nebeneinander, insbesondere in einem Linienraster, angeordnet. Das Linienraster ist insbesondere parallel zu einer von der Förderschiene vorgegebenen Förderrichtung orientiert. Die Länge des Linienrasters entlang der Förderrichtung gibt die Größe, insbesondere die Breite, des Erfassungsbereichs entlang der Förderrichtung vor. Insbesondere sind die Erfassungssensoren in dem Linienraster mit, insbesondere identischen, Rasterabständen zueinander angeordnet. Die Rasterabstände sind insbesondere derart festgelegt, dass ein Hängeadapter, der an der Förderschiene innerhalb des Erfassungsbereichs angeordnet ist, fehlerfrei von einem der Erfassungssensoren erfasst wird. Die Erfassungssensoren sind insbesondere als Lichtschranken ausgeführt. Die Erfassungssensoren bilden ein sogenanntes Lichtgitter. Die Erfassungssensoren ermöglichen eine unmittelbare und unkomplizierte Erfassung der Anzahl der Hängeadapter, also eines sogenannten Füllstandes des Erfassungsbereichs.

Ein schaltbares Stoppelement gemäß Anspruch 5 vereinfacht das Aufgeben der Hängeadapter in die Fördertechnik mit dem veränderlich festlegbaren Transportabstand. Das Stoppelement ist vorzugsweise zwischen einer Blockadeposition, in der ein dem Stoppelement benachbarter Hängeadapter an der Förderschiene blockiert ist, und einer Freigabeposition, in der ein dem Stoppelement benachbarter Hängeadapter für die Förderung von der Förderschiene in die Fördertechnik freigegeben ist, schaltbar. Das Stoppelement kann reversibel kontaktierend mit dem jeweiligen Hängeadapter zusammenwirken. Das Stoppelement ist vorzugsweise an der Förderschiene angeordnet.

Vorzugsweise weist das Stoppelement mindestens einen Stoppriegel auf, welcher zum reversiblen Blockieren des Hängeadapters relativ zu dem Hängeadapter und/oder zu der Förderschiene verlagerbar ist. Der Stoppriegel kann drehbar und/oder linear verschiebbar gelagert sein. Der mindestens eine Stoppriegel kann derart gelagert sein, dass zumindest eine Bewegungskomponente einer Verlagerungsbewegung zwischen der Blockadeposition und der Freigabeposition senkrecht zu der Förderrichtung des Hängeadapters und/oder einer Längsrichtung der Förderschiene orientiert ist. Vorzugsweise bleibt die Integrität der Förderschiene in der Blockadeposition und der Freigabeposition bestehen. Insbesondere erfolgt keine Trennung der Förderschiene in der Blockadeposition und in der Freigabeposition. Hierdurch ist die Vorrichtung besonders robust und störungsfrei im Betrieb.

Gemäß einem Aspekt der Erfindung weist die Vereinzelungseinheit einen Antrieb, insbesondere einen Motor, auf. Der Antrieb kann zum Verlagern des Stoppelements, insbesondere zwischen der Blockadeposition und der Freigabeposition, und/oder zum Antreiben, insbesondere zum Beschleunigen des Hängeadapters entlang der Förderschiene, ausgebildet sein. Der Antrieb zum Verlagern des Stoppelements kann ein rotatorischer Antrieb oder ein Linearantrieb sein, insbesondere ein fluidischer Antrieb, insbesondere ein Pneumatikzylinder oder ein Hydraulikzylinder, oder ein elektrischer Antrieb, insbesondere ein elektrisch betriebener Spindeltrieb. Beispielsweise kann das mindestens eine Stoppelement in der Form eines Rads mit Zähnen zum Blockieren und/oder Antreiben des Hängeadapters ausgebildet sein.

Ein Stoppelement gemäß Anspruch 6 ermöglicht das unmittelbare Blockieren und Freigeben eines Hängeadapters.

Eine Hängeförderanlage gemäß Anspruch 7 weist im Wesentlichen die Vorteile der Vorrichtung auf, worauf hiermit verwiesen wird. Insbesondere steht die Vereinzelungseinheit der Vorrichtung mit der Fördertechnik, die mit der Vorrichtung, insbesondere mit der Förderschiene, fördertechnisch verbunden ist, in Signalverbindung. Die Signalverbindung kann kabelgebunden oder kabellos ausgeführt sein. Dadurch ist das Aufgeben der Hängeadapter in die Fördertechnik vereinfacht und unkompliziert gewährleistet.

Gemäß einem Aspekt der Erfindung ist die Vorrichtung entlang der Förderrichtung der Hängeadapter zwischen zwei verzweigungsfreien Abschnitten, insbesondere einem Zuführabschnitt und einem Abführabschnitt, der Fördertechnik angeordnet. Einer oder beide der verzweigungsfreien Abschnitte können Förderantriebsmittel, insbesondere Mitnehmer, zum Antreiben der Hängeadapter entlang der Förderrichtung aufweisen und/oder förderantriebsfrei ausgebildet sein.

Gemäß einem weiteren Aspekt der Erfindung kann die Vorrichtung in Förderrichtung vor und/oder nach einer Verzweigung, insbesondere aufweisend eine Schienenweiche, angeordnet sein. Bei einer Anordnung in Förderrichtung nach der Verzweigung kann die Vorrichtung zum veränderlichen Festlegen des Transportabstands der über mindestens zwei, insbesondere mindestens drei, Weichenstränge zugeführten Hängeadapter ausgebildet sein.

Eine Fördertechnik gemäß Anspruch 8 vereinfacht die Mitnahme der Hängeadapter mit definiertem Transportabstand. Insbesondere sind an einem Fördermittel mehrere Mitnehmer befestigt, wobei die Mitnehmer mit jeweils einem Hängeadapter in Eingriff bringbar sind. Als Fördermittel dient insbesondere eine Förderkette, wobei die Mitnehmer insbesondere als verlängerte Kettenbolzen ausgeführt sein können.

Eine Anordnung der Mitnehmer gemäß Anspruch 9 ermöglicht eine vereinfachte Festlegung des Transportabstands. Die Mitnehmer sind insbesondere mit einem regelmäßigen Mitnehmerabstand entlang des Fördermittels angeordnet.

Ein Mitnehmerabstand gemäß Anspruch 10 berücksichtigt die Erkenntnis, dass es nicht erforderlich ist, einen Mitnehmerabstand festzulegen, der kleiner ist als ein minimaler Abstand benachbarter Hängeadapter. Ein minimaler Abstand benachbarter Hängeadapter ist dann gegeben, wenn die Hängeadapter sich unmittelbar berühren. Der so definierte, minimale Abstand benachbarter Hängeadapter zueinander entspricht der entlang der Förderrichtung orientierten Länge der Hängeadapter. Insbesondere ist der Mitnehmerabstand mindestens so groß wie oder größer als die Länge eines Hängeadapters. Insbesondere beträgt der Mitnehmerabstand ein beliebiges Vielfaches, das größer ist als 1, insbesondere mindestens das 1,2-fache, insbesondere mindestens das 1,5-fache, insbesondere mindestens das 2-fache, insbesondere mindestens das 3-fache der Länge der Hängeadapter.

Ein Verfahren gemäß Anspruch 11 weist im Wesentlichen die Vorteile der Vorrichtung auf, worauf hiermit verwiesen ist. Vorzugsweise ist die Hängeförderanlage entsprechend der vorstehenden Beschreibung ausgebildet. Das Verfahren kann mit mindestens einem der Merkmale weitergebildet sein, die vorstehend in Zusammenhang mit der Vorrichtung und/oder der Hängeförderanlage beschrieben sind. Wesentlich ist, dass die Anzahl der innerhalb des Erfassungsbereichs angeordneten Hängeadapter erfasst wird und in Abhängigkeit davon der Transportabstand veränderlich festgelegt wird und die Hängeadapter mit diesem veränderlich festgelegten Transportabstand in die Fördertechnik aufgegeben werden.

Ein Verfahren gemäß Anspruch 12 ermöglicht ein vereinfachtes Aufgeben der Hängeadapter in die Fördertechnik.

Sowohl die in den Patentansprüchen angegebenen Merkmale als auch die in der nachfolgenden Ausführungsform der erfindungsgemäßen Vorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich aus der nachfolgenden Beschreibung eines Ausführungsbeispiels anhand der Zeichnung. Es zeigen:
- Fig. 1: eine schematische Darstellung einer Hängeförderanlage,
- Fig. 2: eine schematische Seitenansicht einer erfindungsgemäßen Vorrichtung in einer Hängeförderanlage,
- Fig. 3: eine vergrößerte Detailansicht der Vorrichtung gemäß Fig. 2 mit der Erfassungseinheit, und
- Fig. 4: eine teilgeschnittene Seitenansicht einer Fördertechnik der Hängeförderanlage gemäß Fig. 2.

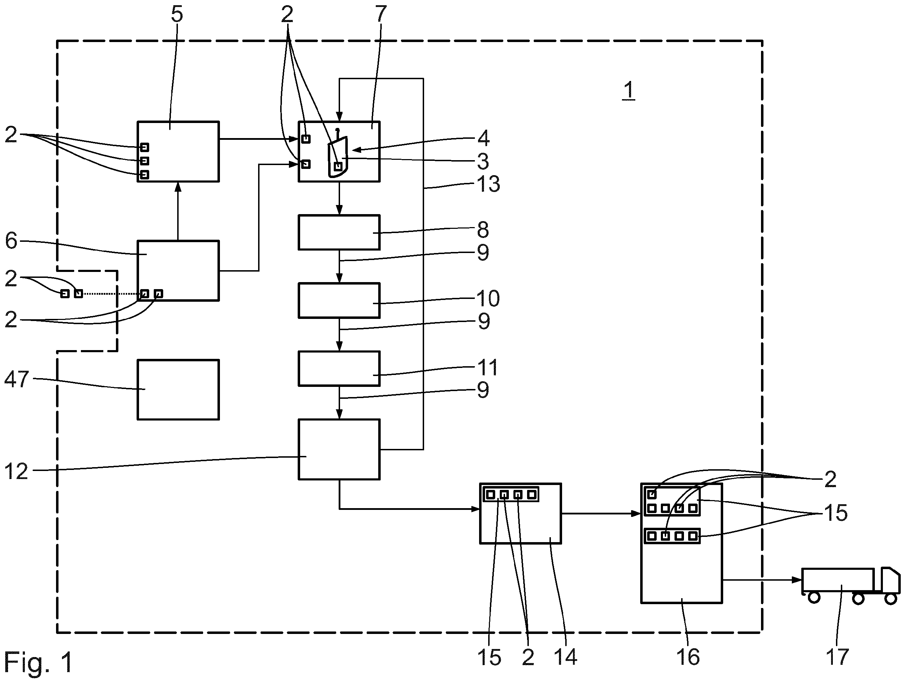

Eine in Fig. 1 als Ganzes mit 1 gekennzeichnete Hängeförderanlage dient zum Fördern und/oder Transportieren von Einzelwaren 2. Die Einzelwaren 2 werden in der Hängeförderanlage 1, insbesondere vereinzelt, in Transporttaschen 3 hängend gefördert. Die mit einer Einzelware 2 bestückte Transporttasche 3 bildet ein Hängefördergut 4. Die Einzelwaren 2 sind beispielsweise in Tüten verpackte Kleidungsstücke oder in anderen Transportbehältnissen, insbesondere Kartons, verpackte Waren aus dem Bereich des Online-Handels, dem sogenannten E-Commerce.

Das Hängefördergut 4 kann alternativ auch als Transportmittel einen Kleiderbügel umfassen, an dem ein Kleidungsstück hängend gefördert wird.

Die Hängeförderanlage 1 umfasst ein Warenlager 5, in dem die Einzelwaren 2 eingelagert sind. Das Warenlager 5 kann als manuelles Lager oder als automatisches Lager ausgeführt sein. Die Hängeförderanlage 1 weist ferner einen Wareneingang 6 auf, über den die Einzelwaren 2 der Hängeförderanlage 1, insbesondere von extern, zugeführt werden. Dem Wareneingang 6 können auch Retourenwaren zugeführt werden.

Der Wareneingang 6 ist fördertechnisch mit dem Warenlager 5 verbunden. Die fördertechnische Verbindung ist beispielsweise ein Förderband oder eine manuelle Zubringung der Einzelwaren 2, die insbesondere auch in Gebinden im Wareneingang 6 vorliegen können, zu dem Warenlager 5.

Die Hängeförderanlage 1 umfasst ferner mindestens eine Beladestation 7, an der die Einzelwaren 2 in die Transporttasche 3 geladen werden. Die Beladestation 7 ist sowohl mit dem Warenlager 5 als auch mit dem Wareneingang 6 jeweils unabhängig fördertechnisch verbunden. Mittels der fördertechnischen Verbindung können die Einzelwaren 2 aus dem Warenlager 5 und/oder aus dem Wareneingang 6 zur Beladestation 7 gefördert werden. Die Einzelwaren können von dem Warenlager 5 und/oder dem Wareneingang 6 auch manuell zur Beladestation 7, insbesondere mittels eines Federbogenwagens oder eines Palettengutwagens gefördert werden.

Die Hängeförderanlage 1 umfasst eine Vorrichtung 8 zum Aufgeben von Hängefördergut 4 in die Hängeförderanlage 1. Die Hängeförderanlage 1 umfasst eine Fördertechnik 9 zum Mitnehmen der aufgegebenen Hängefördergüter 4. Die Vorrichtung 8 ist mit Fördertechnik 9 fördertechnisch verbunden.

Die Hängeförderanlage 1 umfasst einen Warenspeicher 10 zum Speichern, insbesondere zum Zwischenspeichern der Hängefördergüter 4 in der Hängeförderanlage 1.

Die Hängeförderanlage 1 weist ferner eine Sortiereinheit 11 auf, die zum Sortieren der Hängefördergüter 4, also zum Verändern der Reihenfolge der Hängefördergüter 4 im Warenstrom, dient. Die Sortiereinheit 11 kann mehrere parallel und/oder in Reihe angeordnete Staustrecken und/oder einen oder mehrere Umlaufkreisel aufweisen. Zusätzlich oder alternativ kann die Sortiereinheit 11 als Matrixsorter ausgeführt sein.

Die Hängeförderanlage 1 weist mindestens eine Entladestation 12 auf. Je Sortiereinheit 11 können mehrere, insbesondere drei oder fünf, Entladestationen 12 vorgesehen sein. Insbesondere kann jede an die Sortiereinheit 11 angeschlossene Entladestation 12 von jedem Umlaufkreisel der Sortiereinheit 11 erreicht werden. In der Entladestation 12 werden die mit jeweils einer Einzelware 2 beladenen Transporttaschen 3, insbesondere automatisiert, geöffnet und entladen.

Die in der Entladestation 12 entleerten Transporttaschen 3 werden über eine Rückführstrecke 13 in der Hängeförderanlage 1 zurückgeführt und insbesondere der Beladestation 7 als Leertaschen zum erneuten Beladen mit Einzelwaren 2 zur Verfügung gestellt. Die entleeren Transporttaschen 3 können auch in einem nicht dargestellten Leertaschen-Speicher zwischengespeichert werden.

Die Entladestation 12 ist fördertechnisch mit mindestens einer Packstation 14 verbunden. An der Packstation werden die Einzelwaren 2 zu einem versandfertigen Auftrag 15 gepackt. Die Packstation 14 ist mit einem Warenausgang 16 fördertechnisch verbunden. Über den Warenausgang 16 können die Aufträge 15 mit den Einzelwaren 2 die Hängeförderanlage 1 verlassen. Aufträge 15 aus dem Warenausgang 16 können mittels externer Transportmittel 17, insbesondere Transportfahrzeuge, insbesondere Lastkraftwagen, abtransportiert werden.

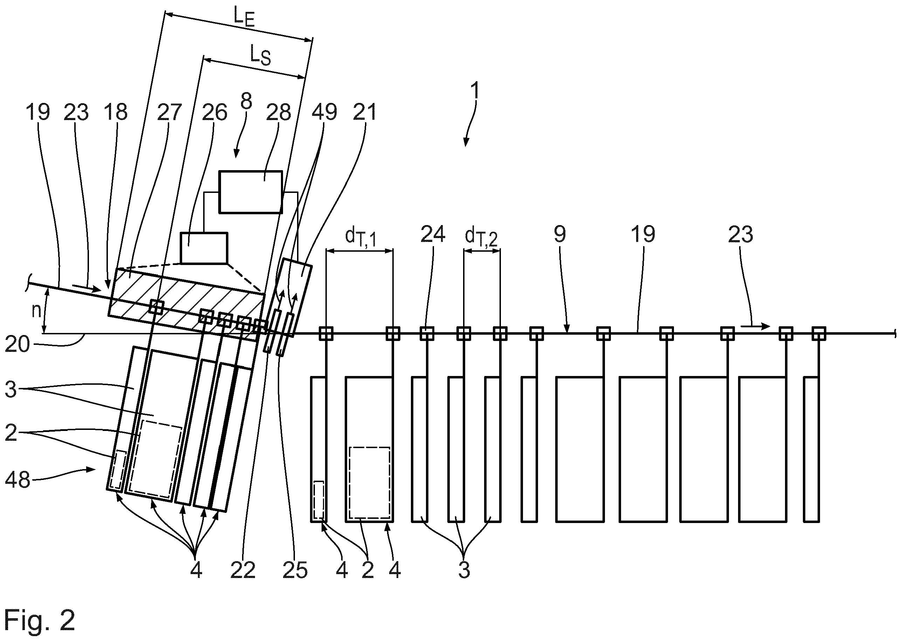

Nachfolgend wird anhand der Fig. 2 die Vorrichtung 8 näher erläutert.

Die Vorrichtung 8 umfasst eine Staustrecke 18 mit einer Förderschiene 19, die ein Aufstauen der Transporttaschen 3 im Bereich der Staustrecke 18 ermöglicht. Jede Transporttasche 3 ist jeweils an einem Hängeadapter 24 angehängt. Die Hängeadapter 24 sind entlang der Förderschiene 19 geführt verlagerbar. Die Transporttaschen 3 werden entlang der Förderschiene 19 einzeln und hängend gefördert. Die Förderschiene 19 ist mit einem Neigungswinkel n gegenüber der Horizontalen 20 geneigt angeordnet. Der Neigungswinkel n beträgt insbesondere zwischen 1° und 10°. Die Transporttaschen 3 werden entlang der Förderschiene 19 in Folge der Neigung schwerkraftbedingt selbsttätig gefördert. Zusätzlich oder alternativ kann die Förderschiene 19 auch einen in Fig. 2 nicht dargestellten Förderantrieb aufweisen, um die Transporttaschen 3 entlang der Förderschiene 19 aktiv, also angetrieben, zu fördern.

Ein Aufstauen der Transporttaschen 3 an der Staustrecke 18 ist durch eine Vereinzelungseinheit 21 gewährleistet, die ein erstes Stoppelement 22 aufweist. Das erste Stoppelement 22 ist an einem stromabwärts gelegenen Ende der Förderschiene 19, insbesondere am Übergang der Förderschiene 19 zu der Fördertechnik 9, angeordnet. Das erste Stoppelement 22 ist insbesondere quer und insbesondere senkrecht zu einer von der Förderschiene 19 vorgegebenen Förderrichtung 23 orientiert. Das erste Stoppelement 22 ist entlang einer Richtung quer und insbesondere senkrecht zur Förderrichtung 23 verlagerbar bezüglich der Förderschiene 19 angeordnet. In der in Fig. 2 gezeigten Anordnung ist das erste Stoppelement 22 in einer Blockadeposition. In der Blockadeposition ist das erste Stoppelement 22 derart angeordnet, dass ein dem ersten Stoppelement 22 benachbarter Hängeadapter 24 an der Förderschiene 19 blockiert ist. Die Förderung des Hängeadapters 24 entlang der Förderschiene 19 ist durch das erste Stoppelement 22 blockiert.

Die Vereinzelungseinheit 21 weist ein zweites Stoppelement 25 auf, das im Wesentlichen identisch zu dem ersten Stoppelement 22 ausgeführt ist. Das zweite Stoppelement 25 ist analog dem ersten Stoppelement 22 quer und insbesondere senkrecht bezüglich der Förderrichtung 23 an der Förderschiene 19 angeordnet und entlang einer Richtung quer und insbesondere senkrecht zur Förderrichtung 23 bezüglich der Förderschiene 19 verlagerbar. Das zweite Stoppelement 25 ist in dem Übergangsbereich von der Förderschiene 19 zur Fördertechnik 9 an der Vorrichtung angeordnet. Bezüglich des ersten Stoppelements 22 ist das zweite Stoppelement 25 stromabwärts bezüglich der Förderrichtung 23 angeordnet. Insbesondere ist das zweite Stoppelement 25 bezüglich des ersten Stoppelements 22 mit einem Abstand entlang der Förderrichtung 23 angeordnet. Der Abstand zwischen den Stoppelementen 22, 25 ist mindestens so groß, dass ein Hängeadapter 24 zwischen den beiden Stoppelementen 22, 25 an der Förderschiene 19 angeordnet werden kann. Der Abstand zwischen den Stoppelementen 22, 25 kann auch so groß gewählt werden, dass mehrere Hängeadapter 24 zwischen den Stoppelementen 22, 25 angeordnet sein können, insbesondere mindestens zwei, insbesondere mindestens drei, insbesondere mindestens vier oder mehr Hängeadapter 24.

Die Vereinzelungseinheit 21 kann auch eine drehbare Spindel mit einem Schneckengang aufweisen, wobei sich in jedem Schneckengang immer nur eine Transporttasche 3 befindet. Durch die Drehung der Spindel werden die Transporttaschen 3 vereinzelt in die Fördertechnik 9 aufgegeben.

Im Bereich der Staustrecke 18 ist an der Förderschiene 19 eine Erfassungseinheit 26 angeordnet. Die Erfassungseinheit 26 dient zum Erfassen der Anzahl der Hängeadapter 24 innerhalb eines Erfassungsbereichs 27 der Erfassungseinheit 26. Der Erfassungsbereich 27 ist an der Förderschiene 19 angeordnet und erstreckt sich insbesondere entlang der Förderschiene 19.

Die Erfassungseinheit 26 steht in Signalverbindung mit einer Steuerungseinheit 28. Die Steuerungseinheit 28 ist dazu eingerichtet, einen Transportabstand d_{T} für das Fördern der Transporttaschen 3 mittels der Fördertechnik 9 festzulegen. Die Signalverbindung zwischen der Erfassungseinheit 26 und der Steuerungseinheit 28 ist in Fig. 2 schematisch angedeutet als Kabelverbindung. Die Signalverbindung kann auch kabellos, insbesondere mittels einer Funkverbindung und insbesondere mittels einer Bluetooth-Verbindung erfolgen.

Die Steuerungseinheit 28 steht zudem mit der Vereinzelungseinheit 21 in, insbesondere kabelgebundener, Signalverbindung.

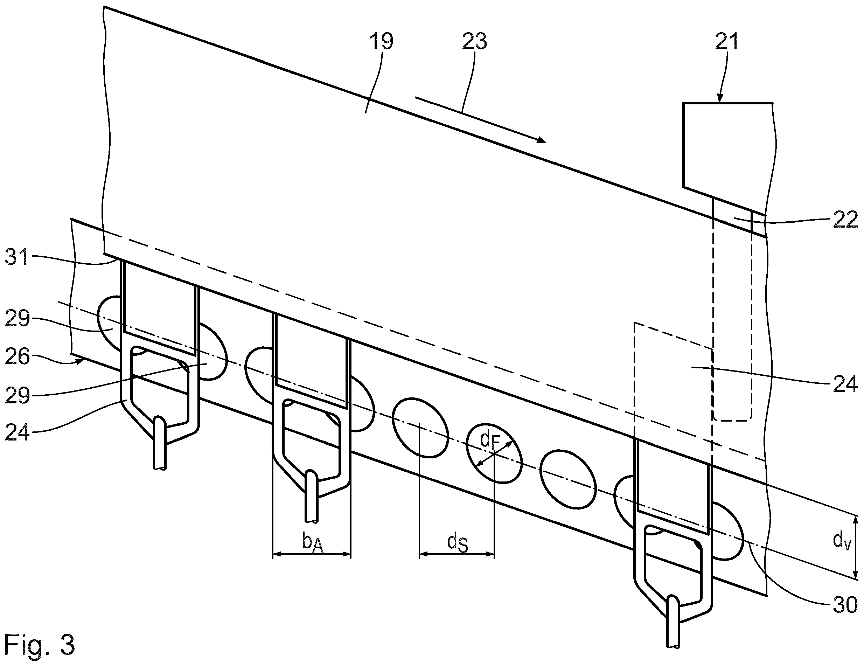

Nachfolgend wird anhand der Fig. 3 die Erfassungseinheit 26 näher erläutert.

Die Erfassungseinheit 26 umfasst mehrere, gemäß dem gezeigten Ausführungsbeispiel sechszehn, Erfassungssensoren 29. Es können auch mehr oder weniger als sechszehn Erfassungssensoren 29 in der Erfassungseinheit 26 vorgesehen sein. Die Erfassungssensoren 29 sind entlang der Förderschiene 19 in einem Linienraster angeordnet. Das Linienraster weist eine Rasterrichtung 30 auf, die parallel zur Förderrichtung 23 der Förderschiene 19 orientiert ist.

Entlang der Rasterrichtung 30 sind die Erfassungssensoren 29 mit einem, insbesondere identischen, Rasterabstand ds zueinander angeordnet. Der Rasterabstand ds ist entlang der Horizontalen 20 orientiert. Durch den Rasterabstand ds wird die Auflösungsgenauigkeit der Erfassungseinheit 26 festgelegt. Gemäß dem gezeigten Ausführungsbeispiel ist der Rasterabstand ds insbesondere so definiert, dass ein Hängeadapter 24, der an einer beliebigen Stelle innerhalb des Erfassungsbereichs 27 angeordnet ist, von einem Erfassungssensor 29 zuverlässig erfasst wird. Die Hängeadapter weisen entlang der Förderrichtung 23 eine Adapterbreite b_{A} auf. Insbesondere gilt: d_{S} ≤ b_{A}.

Die Erfassungssensoren 29 weisen eine Sensorfläche auf, die gemäß dem gezeigten Ausführungsbeispiel kreisförmig ausgeführt ist. Die Sensorfläche kann auch eine unrunde Form, insbesondere eine Rechteck- oder Quadrat-Form haben. Die Erfassungsfläche weist eine entlang der Horizontalen 20 orientierte Horizontalerstreckung auf, die gemäß der kreisförmigen Ausführung des Ausführungsbeispiels einen Durchmesser d_{F} hat. Als Rasterabstand ds wird der Mittelpunktsabstand der Sensorflächen definiert. Insbesondere gilt: d_{S} > d_{F}.

Insbesondere gilt: ds < b_{A} + d_{F}.

Durch die Anzahl der Erfassungssensoren 29, die Rasterabstände ds und den Neigungswinkel n ergibt sich eine Länge L_{E} des Erfassungsbereichs 27. Die Länge L_{E} ist entlang der Förderrichtung 23 orientiert.

Die Erfassungseinheit 26 ist bezüglich der Förderschiene 19 derart angeordnet und insbesondere an der Förderschiene 19 befestigt, dass die Rasterrichtung 30 mit einem Vertikalabstand dv unterhalb eines unteren Endes 31 der Förderschiene 19 verläuft. Die Erfassungseinheit 26 ist derart angeordnet, dass die Erfassungssensoren 29 zuverlässig die aus der Förderschiene 19 nach unten hervorragenden Hängeadapter 24 erfassen.

Die Erfassungssensoren 29 sind gemäß dem gezeigten Ausführungsbeispiel als Lichtschranken ausgeführt mit einem Sendeelement und einem Empfangselement. Das Sendeelement sendet ein optisches Signal aus, das von dem korrespondierenden Empfangselement empfangen wird. Wird kein optisches Signal empfangen, bedeutet dies, dass zwischen dem Sendeelement und dem Empfangselement ein Gegenstand, also ein Hängeadapter 24, angeordnet ist.

Alternativ kann der Erfassungssensor 29 mit einem Sende-/Empfangselement und einem Reflexionselement ausgeführt sein. Das Sende-/Empfangselement sendet ein optisches Signal an das Reflexionselement, das von diesem an das Sende-/Empfangselement zurückreflektiert wird. Entsprechend wird hier ein Hängeadapter 24 erfasst, wenn kein reflektiertes Signal von dem Sende-/Empfangselement erfasst wird.

Die Erfassungssensoren 29, also die Sendeelemente und Empfangselemente bzw. die Sende-/Empfangselemente und die Reflexionselemente, sind jeweils paarweise beidseitig der Förderschiene 19 angeordnet. Die Hängeadapter 24 werden entlang der Förderschiene 19 zwischen den paarweise angeordneten Erfassungssensoren 29 hindurchgefördert. Die Erfassungssensoren 29 bilden ein sogenanntes Lichtgitter.

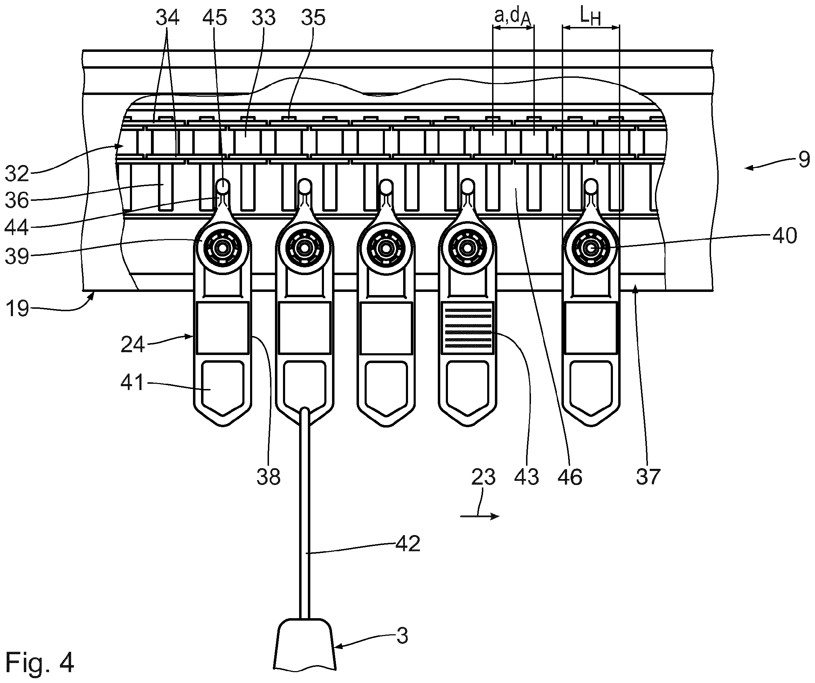

Nachfolgend wird anhand der Fig. 4 die Fördertechnik 9 näher erläutert.

Die Fördertechnik 9 der Hängeförderanlange 1 weist die Förderschiene 19 auf, die mittels einer geeigneten Trageinrichtung in einem Raum verlegbar ist. In der als Hohlkasten-Profil ausgebildeten Förderschiene 19 ist ein Fördermittel 32 in Form einer Förderkette angeordnet, das mittels nicht dargestellter Antriebsmittel entlang der Förderrichtung 23 antreibbar ist. Weiterhin sind die Hängeadapter 24 dargestellt, die mittels des Fördermittels 32 in der Förderschiene 19 bewegbar sind.

Bei der Förderkette 32 handelt es sich um eine sogenannte Rollenkette, die Rollen 33 aufweist, die in einem Rollenabstand a voneinander mittels Verbindungslaschen 34 und Bolzen 35 schwenkbar miteinander verbunden sind. Die Bolzen 35 weisen nach unten vorstehende, als Mitnehmer 36 dienende bolzenförmige Verlängerungen auf. Die Bolzen 35 mit den Mitnehmern 36 verlaufen senkrecht zur Förderschiene 19 in einer durch die Förderrichtung 23 aufgespannten Vertikalebene.

Ein Mittenabstand benachbarter Mitnehmer 36 in der Förderschiene 19 in Förderrichtung 23 entspricht exakt der Teilung der Förderkette 32, also dem Rollenabstand a, und ist insoweit unveränderbar und konstant. Der Mittenabstand benachbarter Mitnehmer 36 entspricht einem regelmäßigen Mitnehmerabstand d_{A}.

An ihrer Unterseite weist die Förderschiene 19 einen sich in Förderrichtung 23 erstreckenden Längsschlitz 37 auf. Durch den Längsschlitz 37 ragt ein flaches Tragteil 38 jedes Hängeadapters 24 nach unten aus der Förderschiene 19 heraus. In seinem oberen Bereich weist der Hängeadapter 24 beiderseits des Tragteils 38 je eine Laufrolle 39 auf, die sich jeweils auf einem nicht näher dargestellten Führungssteg der Förderschiene abstützen und hierauf in Förderrichtung 23 verschiebbar sind. Es ist also nur ein paar von gemeinsamen Laufrollen 39 vorhanden, die um eine gemeinsame Achse 40 drehbar sind. Der gesamte Hängeadapter 24 kann in der Förderschiene 19 um die Achse 40 pendeln.

Das Tragteil 38 weist an seinem unteren Ende eine Aufnahmeöffnung 41 auf, in die ein Haken 42 der Transporttasche 3 einhängbar ist. In die Aufnahmeöffnung 41 kann auch ein Haken 42 eines Kleiderbügels eingehängt werden.

Zwischen der Aufnahmeöffnung 41 und der Unterseite der Förderschiene 19 ist ein Identifizierungselement 43 an dem Hängeadapter 24 angeordnet, bei dem es sich um einen Transponder, einen Strichcode oder einen QR-Code handeln kann. Das Identifizierungsgerät 38 verläuft entsprechend der Anordnung des plattenartigen Tragteils 38 in Förderrichtung 23, liegt also mit seiner Hauptfläche offen quer zur Förderrichtung 23, also zur Seite hin.

Es ist damit also mittels eines Identifizierungsgeräts, wie beispielsweise einen Strichcodeleser oder einen Transponderleser eindeutig erfassbar.

Oberhalb der Laufrollen 39 erstreckt sich ein stilartiger Ansatz 44 des Hängeadapters 24 der einstückig mit dem Tragteil 38 an dessen oberen Ende ausgebildet ist. Am oberen Ende des Ansatzes 44 ist ein Anschlag 45 in Form eines Querriegels ausgebildet. Der Ansatz 44 und der Anschlag 45 haben die Grundform eines Hammers. Mit dem Ansatz 44 und dem Anschlag 45 ist der Hängeadapter 24 in einem zwischen zwei benachbarten Mitnehmern 36 gebildeten Zwischenraum 46 angeordnet. Bei einer Förderbewegung der Förderkette entlang der Förderrichtung 23 werden die Hängeadapter jeweils von dem in Förderrichtung 23 nachlaufenden Mitnehmer 36 mitgenommen, also transportiert. Die Fördertechnik weist eine feste Mitnahme auf.

Vorteilhaft ist es, wenn die Einzelwaren 2 jeweils eine Einzelwaren-Identifikationseinrichtung aufweisen, über die die Einzelwaren 2 eindeutig identifizierbar sind. Bei Kleidungsstücken kann dies beispielsweise anhand des Herstellers, des Artikels, der Größe und/oder der Farbe erfolgen. Die Identifikationsdaten der Einzelwaren 2 können mit den im Identifikationselement 38 eines Hängeadapters 24 gespeicherten Daten an eine zentrale Steuerungseinheit 47 signaltechnisch übermittelt und datentechnisch miteinander verknüpft werden. Die Einzelwaren 2 können während ihres Transports in der Hängeförderanlage 1 über entsprechend angeordnete Lesegeräte entlang der Hängeförderanlage 1, die insbesondere die Position der Transporttaschen 3 erfassen, eindeutig zugeordnet werden. Dadurch ist eine vereinzelte, gezielte Förderung der Einzelwaren 2 entlang der Hängeförderanlage möglich.

Bezüglich konstruktiver Details und weiterer Einzelheiten der Fördertechnik 9, insbesondere der Förderschiene 19, des Fördermittels 32 und der Hängeadapter 24, wird ausdrücklich auf die DE 10 2005 006 455 A1 verwiesen.

Nachfolgend wird anhand der Fig. 1 bis 4 ein Verfahren zum Aufgeben der Transporttaschen 3 in die Fördertechnik 9 der Hängeförderanlage 1 näher erläutert.

Einzelwaren 2 werden dem Wareneingang 6 zugeführt und von dort entweder direkt oder über das Warenlager 5 zu der Beladestation 7 gefördert, wo jeweils eine Transporttasche 3 mit, insbesondere einer einzigen, Einzelware 2 beladen wird. Die mit Einzelwaren 2 beladenen Transporttaschen 3 werden von der Beladestation 7 zu der Vorrichtung 8 gefördert und an der Staustrecke 18 gestaut.

Die an der Staustrecke 18 gestaut angeordneten Transporttaschen 3 bilden eine Stichprobe 48 von Transporttaschen 3. Mittels der Erfassungseinheit 26 wird die Anzahl der Hängeadapter 24 im Erfassungsbereich 27 erfasst. Die Anzahl der erfassten Hängeadapter 24, gemäß Fig. 2 beispielsweise fünf, wird an die Steuerungseinheit 28 übermittelt. Darüber hinaus wird von der Erfassungseinheit 26 die Staulänge Ls der aufgestauten Transporttaschen 3 an die Steuerungseinheit 28 übermittelt. Als Staulänge Ls wird die Erstreckung entlang der Förderschiene 19 verstanden, in der sich die Hängeadapter 24 befinden. Gemäß dem gezeigten Ausführungsbeispiel ist die Staulänge Ls kleiner als die Längserstreckung L_{E} des Erfassungsbereichs 27. Die Staulänge Ls ist kleiner oder gleich der Länge L_{E} des Erfassungsbereichs 27.

Aus der Staulänge Ls und der Adapteranzahl innerhalb des Erfassungsbereichs 27 wird in der Steuereinheit 28 ein mittlerer Adapterabstand dₘ berechnet als Quotient aus der Staulänge Ls und der um 1 verringerten Anzahl der Adapter N_{A}, also dₘ = Ls : (N_{A} - 1).

In der Steuerungseinheit 28 wird in Abhängigkeit des mittleren Adapterabstands dₘ ein Transportabstand d_{T} veränderlich festgelegt, mit dem die Transporttaschen 3 in die Fördertechnik 9 der Hängeförderanlage 1 aufgegeben werden. Dabei wird der Transportabstand d_{T} derart festgelegt, dass die Transporttaschen 3 in der Fördertechnik 9 beanstandet zueinander gefördert werden. Bei der Förderung entlang der Fördertechnik 9 berühren sich die Transporttaschen 3 typischerweise nicht. Insbesondere gilt: d_{T} > dₘ.

Da der mittlere Adapterabstand dₘ ein Mittelwert ist, ist es denkbar, dass der tatsächliche Adapterabstand einer aufzugebenden Transporttasche 3 größer ist als der mittlere Adapterabstand dₘ. Um zu vermeiden, dass ein Kontakt zwischen den Transporttaschen 3 in der Fördertechnik 9 erfolgt, wird der Transportabstand d_{T} mit einem Sicherheitsfaktor s_{F} versehen. Insbesondere gilt: d_{T} ≥ dₘ · s_{F}, wobei der Sicherheitsfaktor s_{F} insbesondere zwischen 1,2 und 5, insbesondere zwischen 1,5 und 3 und insbesondere zwischen 2 und 3 liegt.

Das Aufgeben der Transporttaschen 3 in die Fördertechnik 9 erfolgt dadurch, dass das erste Stoppelement 22 von der in Fig. 2 gezeigten Blockadeposition in eine Freigabeposition verlagert wird. Dazu ist das erste Stoppelement 22 mittels der Vereinzelungseinheit 21 entlang der Betätigungsrichtung 49 betätigbar. Aufgrund der Neigung der Staustrecke 18 gelangt die Transporttasche 3, die benachbart zu dem ersten Stoppelement 22 angeordnet ist, daran vorbei und wird an dem zweiten Stoppelement 25, das sich in der Blockadeposition befindet, gestoppt. Anschließend wird das erste Stoppelement 22 wieder in die Blockadeposition verlagert. Dadurch ist verhindert, dass eine weitere Transporttasche 3 zwischen die beiden Stoppelemente 22, 25 gelangen kann. Insbesondere ist zwischen den beiden Stoppelementen 22, 25 nur ein einziger Hängeadapter 24 angeordnet.

Nach einem definierten Zeitintervall Δt öffnet das zweite Stoppelement 25 und gibt die Transporttasche 3 vereinzelt in die Fördertechnik 9 auf. Die Transporttasche 3, insbesondere der entsprechende Hängeadapter 24, wird von einem der Mitnehmer 36 mitgenommen. In Abhängigkeit des Zeitintervalls Δt und der Geschwindigkeit des Fördermittels 32 in der Fördertechnik 9 resultiert der jeweilige Transportabstand d_{T}. Wie in Fig. 2 dargestellt, weisen die Transporttaschen 3 in Abhängigkeit der geförderten Einzelware 2 unterschiedliche Dicken auf, woraus sich unterschiedliche Adapterabstände und damit ein unterschiedlicher mittlerer Adapterabstand dₘ ergibt. Entsprechend werden unterschiedliche Transportabstände d_{T,1}, d_{T,2} festgelegt.

Das Zeitintervall Δt wird insbesondere derart festgelegt, dass der in die Fördertechnik 9 einzuschleusende Hängeadapter 24 von einem ausgewählten Mitnehmer 36 mitgenommen wird.

Die veränderliche Festlegung der Transportabstände d_{T} erfolgt besonders unkompliziert und zuverlässig.

Die Transporttaschen 3 werden entlang der Fördertechnik 9 mit einem optimalen Transportabstand d_{T} gefördert. Der jeweilige Transportabstand d_{T,i} zwischen zwei benachbarten Transporttaschen 3 ist individuell angepasst.

Der jeweilige Transportabstand d_{T,i} ist so festgelegt, dass eine Kollision benachbarter Transporttaschen 3 und damit eine Störung der Hängeförderanlage 1 vermieden ist. Der Transportabstand d_{T} ist aber auch klein genug, um eine größtmögliche Ausnutzung der Förderleistung der Hängeförderanlage 1 zu gewährleisten.

Vorteilhaft ist es, wenn die Erfassungseinheit 26 die mittleren Abstände dₘ sämtlicher Transporttaschen 3 in der Staustrecke 18 erfasst, an die Steuerungseinheit 28 übermittelt und von dort die Vereinzelungseinheit 21 entsprechend angesteuert wird. Die Steuerungseinheit 28 ist insbesondere als speicherprogrammierbare Steuerung ausgeführt und ermöglicht eine Bewertung der von der Erfassungseinheit 26 übermittelten Werte für die Staulänge Ls und die Anzahl N_{A} der Hängeadapter 24. Vorteilhaft ist es, bei der Festlegung der Transportabstände d_{T} historische Daten zu berücksichtigen, insbesondere die Daten von Hängeadaptern, also deren Anzahl und deren Staulänge Ls zu berücksichtigen, die sich in einem zurückliegenden Zeitraum in dem Erfassungsbereich 27 befunden haben. Diese historischen Daten können insbesondere mit aktuell erfassten Daten kombiniert werden.

Beispielsweise umfassen die historischen Daten derart geringe mittlere Adapterabstände dₘ, die eine Festlegung eines Transportabstands d_{T} ermöglicht hätten, der kleiner ist als ein erforderlicher Mindesttransportabstand. Dadurch, dass der Mindesttransportabstand anlagentechnisch nicht unterschritten werden darf, sind sehr dünne Hängefördergüter mit einem Transportabstand d_{T} aufgegeben worden, der größer ist, als es notwendig gewesen wäre. Daraus ergibt sich eine vergleichsweise reduzierte Förderdichte, die bei der Festlegung des Transportabstands d_{T} auf Basis aktueller Daten berücksichtigt werden kann. Die Berücksichtigung erfolgt insbesondere derart, dass ein Transportabstand d_{T} für eine aktuelle Transporttasche 3 kleiner gewählt oder festgelegt werden kann, als dies gemäß einer für die Festlegung des Transportabstands d_{T} verwendeten Zuordnungsvorschrift erforderlich wäre.

Aufgrund der Berücksichtigung der historischen Daten bei der Verarbeitung der aktuellen Daten können die Transportabstände d_{T} gegebenenfalls kleiner festgelegt werden, als dies aufgrund der Festlegungsvorschrift notwendig wäre, da die zuvor in die Fördertechnik neuen aufgegebenen Fördergüter 4 mit einer geringen Förderdichte aufgegeben worden sind. Die Berücksichtigung der historischen Daten ist insbesondere so lange mögliche, wie ein durch die sehr dünnen Hängefördergüter 4 resultierender Überschuss an Lücken durch die dickeren Hängefördergüter 4 aufgebraucht ist. Durch die Kombination von historischen und aktuellen Daten bei der Festlegung des Transportabstands d_{T} kann die Förderleistung zusätzlich erhöht werden. Auch bei der Kompensation des Überschusses an Lücken ist der anlagenbedingte Mindesttransportabstand einzuhalten.

Weiterhin ist es vorteilhaft, die historischen Daten der Adapterabstände dₘ weiter zu verarbeiten. Insbesondere können die historischen Daten der Adapterabstände dₘ dazu verwendet werden, einen genauen Füllstand einer Abgabe- oder Speicherstrecke zu ermitteln und/oder zu berechnen. Insbesondere können Speichereinheiten für Hängefördergüter 4 effizienter befüllt werden, da eine pauschale Annahme einer durchschnittlichen Dicke für sämtliche Hängefördergüter 4 entbehrlich ist.

Dadurch, dass der Transportabstand d_{T} individuell festgelegt wird, kann eine Auslegung einer Abgabestrecke der Fördertechnik 9 verbessert werden. Für die Auslegung kann der jeweils aktuelle, individuell festgelegte Transportabstand d_{T} verwendet werden. Eine Auslegung der Abgabestrecke auf Basis einer maximalen Dicke der Hängefördergüter ist entbehrlich. Dadurch können die Abgabestrecken effizienter, insbesondere mit einer höheren Warendichte, befüllt werden. Das Risiko einer Überfüllung einer Abgabestrecke ist verhindert. Der Flächenbedarf für die Abgabestrecke ist erhöht. Die Investitionskosten für eine derartige Hängeförderanlage sind reduziert.

Die in die Fördertechnik 9 aufgegebenen Hängefördergüter 4 werden dem Warenspeicher 10, der Sortiereinheit 11 und der Entladestation 12 zugeführt. Dort werden die Einzelwaren 2 von der Transporttasche 3 entleert, an Packstationen 14 zu Aufträgen 15 gepackt und vom Warenausgang 16 ausgeliefert. Die entleerten Transporttaschen 3 werden über die Rückführstrecke 13 der Beladestation 7 zurückgeführt. Es ist auch denkbar, dass die Fördertechnik 9 nicht dargestellte Verzweigungsstrecken aufweist, um die Hängefördergüter 4 an dem Warenspeicher 10 und/oder der Sortiereinheit 11 direkt vorbei zu fördern.

## Patentansprüche

1. Vorrichtung zum Aufgeben von Transporttaschen (3) in eine Fördertechnik (9) einer Hängeförderanlage (1) umfassend
a. eine an die Fördertechnik (9) fördertechnisch koppelbare Förderschiene (19), entlang der die Transporttaschen (3) jeweils mittels eines Hängeadapters (24) hängend förderbar sind,
b. eine Erfassungseinheit (26) zum Erfassen der Anzahl der innerhalb eines Erfassungsbereichs (27) an der Förderschiene (19) angeordneten Hängeadapter (24),
c. eine mit der Erfassungseinheit (26) in Signalverbindung stehende Steuerungseinheit (28), die dazu eingerichtet ist, einen Transportabstand (d_{T}) für das Fördern der Transporttaschen (3) mittels der Fördertechnik (9) veränderlich festzulegen,
d. eine mit der Steuerungseinheit (28) in Signalverbindung stehende Vereinzelungseinheit (21) zum vereinzelten Aufgeben der Hängeadapter (24) in die Fördertechnik (9) mit dem veränderlich festgelegten Transportabstand (d_{T}),
**dadurch gekennzeichnet, dass** die Steuerungseinheit (28) dazu eingerichtet ist, anhand der Anzahl der Hängeadapter (24) einen mittleren Abstand (dₘ) benachbarter Hängeadapter (24) zu bestimmen, anhand dessen der Transportabstand (d_{T}) veränderlich festgelegt wird.

2. Vorrichtung gemäß Anspruch 1, **dadurch gekennzeichnet, dass** die Erfassungseinheit (26) mindestens einen Erfassungssensor (29) zum, insbesondere kontaktlosen, Erfassen eines Hängeadapters (24) aufweist.

3. Vorrichtung gemäß Anspruch 2, **dadurch gekennzeichnet, dass** der mindestens eine Erfassungssensor (29) als optischer Sensor, insbesondere als Lichtschranke, oder als RFID-Sensor ausgeführt ist.

4. Vorrichtung gemäß Anspruch 2 oder 3, **gekennzeichnet durch** mehrere der Erfassungssensoren (29), die entlang der Förderschiene (19) in einem Linienraster angeordnet sind.

5. Vorrichtung gemäß einem der vorstehenden Ansprüche, **dadurch gekennzeichnet, dass** die Vereinzelungseinheit (21) ein schaltbares Stoppelement (22, 25) aufweist, das zwischen einer Blockadeposition, in der der dem Stoppelement (22, 25) benachbarte Hängeadapter (24) an der Förderschiene (19) blockiert ist, und einer Freigabeposition, in der der dem Stoppelement (22, 25) benachbarte Hängeadapter (24) für die Förderung von der Förderschiene (19) in die Fördertechnik (9) freigegeben ist, schaltbar ist.

6. Vorrichtung gemäß Anspruch 5, **dadurch gekennzeichnet, dass** das Stoppelement (22, 25) an der Förderschiene (19) angeordnet, insbesondere an der Förderschiene (19) befestigt ist.

7. Hängeförderanlage (1) umfassend
a. eine Vorrichtung (8) gemäß einem der vorstehenden Ansprüche,
b. eine mit der Vorrichtung (8) fördertechnisch verbundene Fördertechnik (9) zum Mitnehmen der aufgegebenen Hängeadapter (24).

8. Hängeförderanlage gemäß Anspruch 7, **dadurch gekennzeichnet, dass** die Fördertechnik (9) ein Fördermittel (27) mit daran befestigten Mitnehmern (36) aufweist.

9. Hängeförderanlage gemäß Anspruch 8, **dadurch gekennzeichnet, dass** die Mitnehmer (36) mit einem, insbesondere regelmäßigen, Mitnehmerabstand (d_{A}) entlang des Fördermittels (27) angeordnet sind.

10. Hängeförderanlage gemäß Anspruch 9, **dadurch gekennzeichnet, dass** der Mitnehmerabstand (d_{A}) größer ist als eine entlang der Förderrichtung (23) orientierte Länge (L_{H}) der Hängeadapter (24).

11. Verfahren zum Aufgeben von Transporttaschen (3) in eine Fördertechnik (9) einer Hängeförderanlage (1) umfassend die Verfahrensschritte
- hängendes Fördern von jeweils eine Transporttasche (3) tragenden Hängeadaptern (24) entlang einer Förderschiene (19), die an die Fördertechnik (9) fördertechnisch koppelbar ist,
- Erfassen der Anzahl der innerhalb eines Erfassungsbereichs (27) an der Förderschiene (19) angeordneten Hängeadapter (24) mittels einer Erfassungseinheit (26),
- veränderliches Festlegen eines Transportabstands (d_{T}) für das Fördem der Transporttaschen (3) mit der Fördertechnik (9) mittels einer mit der Erfassungseinheit (26) in Signalverbindung stehenden Steuerungseinheit (28),
- vereinzeltes Aufgeben der Hängeadapter (24) in die Fördertechnik (9) mit dem veränderlich festgelegten Transportabstand (d_{T}) mittels einer mit der Steuerungseinheit (28) in Signalverbindung stehenden Vereinzelungseinheit (21),
**dadurch gekennzeichnet, dass** anhand der Anzahl der Hängeadapter (24) ein mittlerer Abstand (dₘ) benachbarter Hängeadapter (24) bestimmt wird, anhand dessen der Transportabstand (d_{T}) veränderlich festgelegt wird.

12. Verfahren gemäß Anspruch 11, **dadurch gekennzeichnet, dass** das vereinzelte Aufgeben der Hängeadapter (24) durch Schalten eines schaltbaren Stoppelements (22, 25) der Vereinzelungseinheit (21) von einer Blockadeposition, in der der dem Stoppelement (22, 25) benachbarte Hängeadapter (24) an der Förderschiene (19) blockiert ist, in eine Freigabeposition, in der der dem Stoppelement (22, 25) benachbarte Hängeadapter (24) für die Förderung von der Förderschiene (19) in die Fördertechnik (9) freigegeben ist, erfolgt.

## Claims

1. An apparatus for feeding transport bags (3) into a conveying system (9) of an overhead conveyor facility (1) comprising
a. a conveying rail (19) which can be coupled in terms of conveying technology to the conveying system (9) and along which the transport bags (3) can each be conveyed in a suspended manner by means of a hanging adapter (24),
b. a detection unit (26) for detecting the quantity of hanging adapters (24) arranged within a detection zone (27) on the conveying rail (19),
c. a control unit (28) which is in signal communication with the detection unit (26) and is configured to variably set a transport spacing (d_{T}) for conveying the transport bags (3) by means of the conveying system (9),
d. a singularizing unit (21), which has a signal communication with the control unit (28), for singularized feeding of the hanging adapters (24) into the conveying system (9) at the variably set transport spacing (d_{T}),
**characterized in that** the control unit (28) is configured to determine, on the basis of the quantity of hanging adapters (24), a mean spacing (dₘ) of adjacent hanging adapters (24), on the basis of which the transport spacing (d_{T}) is variably set.

2. The apparatus according to claim 1, **characterized in that** the detection unit (26) comprises at least one detection sensor (29) for detecting, in particular contactlessly, the hanging adapter (24).

3. The apparatus according to claim 2, **characterized in that** the at least one detection sensor (29) is designed as an optical sensor, in particular as a light barrier, or as an RFID sensor.

4. The apparatus according to claim 2 or 3, **characterized by** a plurality of the detection sensors (29) arranged along the conveying rail (19) in a line grid pattern.

5. The apparatus according to any one of the preceding claims, **characterized in that** the singularizing unit (21) has a switchable stopping element (22, 25) which is switchable between a blocking position, in which the hanging adapter (24) adjacent to the stopping element (22, 25) is blocked on the conveying rail (19), and a release position, in which the hanging adapter (24) adjacent to the stopping element (22, 25) is released for conveying from the conveying rail (19) into the conveying system (9).

6. The apparatus according to claim 5, **characterized in that** the stopping element (22, 25) is arranged on the conveying rail (19), in particular fastened to the conveying rail (19).

7. An overhead conveyor facility comprising
a. the apparatus (8) according to any one of the preceding claims,
b. a conveying system (9) connected to the apparatus (8) in terms of conveying technology for conveying the hanging adapters (24).

8. The overhead conveyor facility according to claim 7, **characterized in that** the conveying system (9) comprises a conveying means (27) with drivers (36) fastened thereto.

9. The overhead conveyor facility according to claim 8, **characterized in that** the drivers (36) are arranged with an, in particular regular, driver spacing (d_{A}) along the conveying means (27).

10. The overhead conveyor facility according to claim 9, **characterized in that** the driver spacing (d_{A}) is greater than a length (L_{H}) of the hanging adapters (24) oriented along the conveying direction (23).

11. The method for feeding transport bags (3) into a conveying system (9) of an overhead conveyor facility (1), comprising the following method steps
- conveying hanging adapters (24) in a suspended manner, each carrying a transport bag (3), along a conveying rail (19) which can be coupled in terms of conveying technology to the conveying system (9),
- detecting the quantity of hanging adapters (24), arranged within a detection zone (27) on the conveying rail (19), by means of a detection unit (26),
- variable setting a transport spacing (d_{T}) for conveying the transport bags (3) with the conveying system (9) by means of a control unit (28) in signal communication with the detection unit (26),
- singularized feeding of the hanging adapters (24) into the conveying system (9) with the variably set transport spacing (d_{T}) by means of a singularizing unit (21) which has a signal communication with the control unit (28),
**characterized in that** a mean spacing (dₘ) of adjacent hanging adapters (24) is determined on the basis of the quantity of hanging adapters (24), on the basis of which the transport spacing (d_{T}) is variably set.

12. The method according to claim 11, **characterized in that** the singular feeding of the hanging adapters (24) takes place by switching a switchable stopping element (22, 25) of the singularizing unit (21) from a blocking position, in which the hanging adapter (24) adjacent to the stopping element (22, 25) is blocked on the conveying rail (19), into a release position in which the hanging adapter (24) adjacent to the stopping element (22, 25) is released for conveying from the conveying rail (19) into the conveying system (9).

## Revendications

1. Dispositif pour introduire des sacs de transport (3) dans une technique de transport (9) d'une installation de transport suspendu (1) comprenant
a. un rail de transport (19) pouvant être couplé par technique de transport à la technique de transport (9), le long duquel les sacs de transport (3) peuvent être transportées en étant suspendues respectivement au moyen d'un adaptateur de suspension (24),
b. une unité de détection (26) pour détecter le nombre d'adaptateurs de suspension (24) disposés à l'intérieur d'une zone de détection (27) sur le rail de transport (19),
c. une unité de commande (28) qui est en liaison de signalisation avec l'unité de détection (26) et qui est conçue pour fixer de manière variable une distance de transport (d_{T}) pour le transport des sacs de transport (3) au moyen de la technique de transport (9),
d. une unité de séparation (21) en liaison de signalisation avec l'unité de commande (28) pour l'introduction individuelle des adaptateurs de suspension (24) dans la technique de transport (9) avec la distance de transport (d_{T}) fixée de manière variable,
**caractérisé en ce que** l'unité de commande (28) est conçue pour déterminer, à l'aide du nombre d'adaptateurs de suspension (24), une distance moyenne (dₘ) d'adaptateurs de suspension (24) voisins, à l'aide de laquelle la distance de transport (d_{T}) est déterminée de manière variable.

2. Dispositif selon la revendication 1, **caractérisé en ce que** l'unité de détection (26) présente au moins un capteur de détection (29) pour détecter, en particulier sans contact, un adaptateur de suspension (24).

3. Dispositif selon la revendication 2, **caractérisé en ce que** ledit au moins un capteur de détection (29) est réalisé sous la forme d'un capteur optique, en particulier d'une barrière lumineuse, ou d'un capteur RFID.

4. Dispositif selon la revendication 2 ou 3, **caractérisé par** plusieurs des capteurs de détection (29) qui sont disposés le long du rail de transport (19) selon une grille de lignes.

5. Dispositif selon l'une quelconque des revendications précédentes, **caractérisé en ce que** l'unité de séparation (21) présente un élément d'arrêt commutable (22, 25) qui peut être commuté entre une position de blocage, dans laquelle l'adaptateur de suspension (24) voisin de l'élément d'arrêt (22, 25) est bloqué sur le rail de transport (19), et une position de libération, dans laquelle l'adaptateur de suspension (24) voisin de l'élément d'arrêt (22, 25) est libéré pour le transport depuis le rail de transport (19) dans la technique de transport (9).

6. Dispositif selon la revendication 5, **caractérisé en ce que** l'élément d'arrêt (22, 25) est disposé sur le rail de transport (19), en particulier est fixé sur le rail de transport (19).

7. Installation de transport suspendu (1) comprenant
a. un dispositif (8) selon l'une quelconque des revendications précédentes,
b. une technique de transport (9) reliée au dispositif (8) par une technique de transport pour l'entraînement des adaptateurs de suspension (24) introduits.

8. Installation de transport suspendu selon la revendication 7, **caractérisée en ce que** la technique de transport (9) présente un moyen de transport (27) avec des entraîneurs (36) qui y sont fixés.

9. Installation de transport suspendu selon la revendication 8, **caractérisée en ce que** les entraîneurs (36) sont disposés le long du moyen de transport (27) avec une distance d'entraîneurs (d_{A}), en particulier régulière.

10. Installation de transport suspendu selon la revendication 9, **caractérisée en ce que** la distance d'entraîneurs (d_{A}) est supérieure à une longueur (L_{H}) des adaptateurs de suspension (24) orientée le long de la direction de transport (23).

11. Procédé pour introduire des sacs de transport (3) dans une technique de transport (9) d'une installation de transport suspendu (1) comprenant les étapes de procédé suivantes
- transport suspendu d'adaptateurs de suspension (24) portant chacun un sac de transport (3) le long d'un rail de transport (19) qui peut être couplé à la technique de transport (9) par une technique de transport,
- détection du nombre d'adaptateurs de suspension (24) disposés à l'intérieur d'une zone de détection (27) sur le rail de transport (19) au moyen d'une unité de détection (26),
- fixation de manière modifiable d'une distance de transport (d_{T}) pour le transport des sacs de transport (3) avec la technique de transport (9) au moyen d'une unité de commande (28) en liaison de signalisation avec l'unité de détection (26),
- introduction individuelle des adaptateurs de suspension (24) dans la technique de transport (9) avec la distance de transport (d_{T}) fixée de manière variable au moyen d'une unité de séparation (21) en liaison de signalisation avec l'unité de commande (28),
**caractérisé en ce qu'**à l'aide du nombre d'adaptateurs de suspension (24), une distance moyenne (dₘ) d'adaptateurs de suspension (24) voisins est déterminée, à l'aide de laquelle la distance de transport (d_{T}) est fixée de manière variable.

12. Procédé selon la revendication 11, **caractérisé en ce que** l'introduction individuelle des adaptateurs de suspension (24) est réalisée par la commutation d'un élément d'arrêt commutable (22, 25) de l'unité de séparation (21) d'une position de blocage, dans laquelle l'adaptateur de suspension (24) voisin de l'élément d'arrêt (22, 25) est bloqué sur le rail de transport (19), dans une position de libération dans laquelle l'adaptateur de suspension (24) voisin de l'élément d'arrêt (22, 25) est libéré pour le transport depuis le rail de transport (19) dans la technique de transport (9).
